# EUROPÄISCHE PATENTSCHRIFT

(11) **EP 2 515 425 B1**
(45) Veröffentlichungstag und Bekanntmachung des Hinweises auf die Patenterteilung: **24.07.2019**
(21) Anmeldenummer: 12002682.8
(22) Anmeldetag: 18.04.2012
(51) Int. Cl.: H02M 3/158, H02J 3/38

(54) **Gleichspannungswandler**
Direct current converter
Convertisseur de tension continue

(30) Priorität: 20.04.2011 DE 102011018357
(43) Veröffentlichungstag der Anmeldung: 24.10.2012
(73) Patentinhaber: SEW-EURODRIVE GmbH & Co. KG, 76646 Bruchsal (DE)
(72) Erfinder: Schill, Christoph, 88213 Ravensburg (DE)
(74) Vertreter: Tüngler, Eberhard

(56) Entgegenhaltungen:
- CH-B1- 700 030
- DE-A1- 4 224 795
- DE-A1-102008 050 402

## Beschreibung

Die vorliegende Erfindung betrifft einen Gleichspannungswandler gemäß Anspruch 1, eine Schaltungsanordnung mit einem solchen Gleichspannungswandler gemäß Anspruch 10 sowie eine Wechselrichterschaltung mit einem solchen Gleichspannungswandler bzw. einer solchen Schaltungsanordnung gemäß Anspruch 13. Vorteilhafte Ausführungsformen sind in den abhängigen Ansprüchen definiert.

Gleichspannungswandler (DC/DC-Wandler) werden häufig in Stromversorgungen verschiedenster Art verwendet. Solche Stromversorgungen können wenigstens einen Wechselrichter zum Betrieb eines Inselnetzes mit Wechselspannung oder zur Einspeisung von Wechselstrom in ein Netz.

Wechselrichter können mit einem sehr guten Wirkungsgrad arbeiten, wenn ihre Eingangsspannung auf die zu erzeugende Wechselspannung angepasst ist. Insbesondere sollte die Eingangsspannung des Wechselrichters dabei zumindest näherungsweise konstant sein. Zur Anpassung von stark variablen Eingangsspannungen, wie sie zum Beispiel in Zusammenhang mit Solargeneratoren häufig auftreten, wird deshalb oft ein Gleichspannungswandler eingesetzt. Der Gleichspannungswandler setzt dabei die variable Gleichspannung in eine relativ konstante Zwischenkreisspannung für den Wechselrichter um.

Aus der CH 700 030 B1 ist eine Schaltungsanordnung mit Wechselrichter und Gleichstromstellerfunktion bekannt.

Aus der DE 10 2008 050 402 A1 ist eine Schaltungsanordnung mit einem Hochsetzsteller und Wechselrichterschaltung mit einer solchen Schaltungsanordnung bekannt.

Aus der DE 42 24 795 A1 ist ein Verfahren zur Erzeugung eines stabilen Regelverhaltens einer Einspeiseschaltung bekannt.

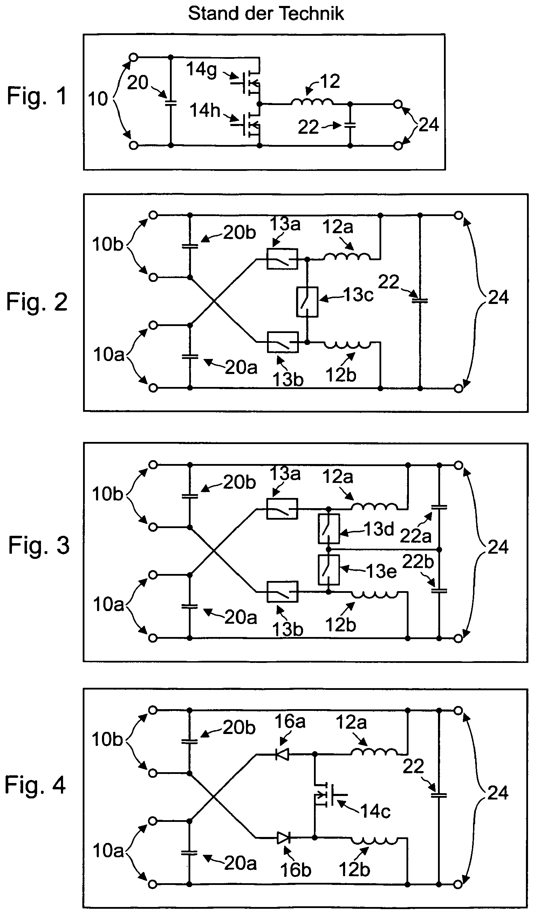

Fig.1 zeigt einen bidirektionalen DC/DC-Wandler nach dem Stand der Technik. Dieser herkömmliche DC/DC-Wandler besteht im Wesentlichen aus zwei Schaltelementen 14g und 14h, welche in Form einer Halbbrücke parallel zu einem ersten Anschluss 10 geschaltet sind, und einer Drossel 12, die mit dem Mittelpunkt der Halbbrücke und dem einen Pol des zweiten Anschlusses 24 verbunden ist. Die Kapazitäten bzw. Kondensatoren 20 und 22 parallel zu den beiden Anschlüssen 10 und 24 dienen zur Pufferung von Rippleströmen.

An den Anschlüssen 10, 24 liegen jeweils Gleichspannungen an. Der bidirektionale DC/DC-Wandler überträgt Energie zwischen diesen Anschlüssen. Dabei werden die Schaltelemente 14g, 14h abwechselnd in schneller Folge ein- und ausgeschaltet (getaktet). So entsteht am Mittelpunkt der Halbbrücke eine rechteckförmige Spannung, deren Mittelwert vom Tastverhältnis der Schaltelemente 14g, 14h abhängt. Die Drossel 12 integriert diese Spannung und führt sie dem zweiten Anschluss 24 zu, wobei sie periodisch Energie aufnimmt und abgibt.

Erfolgt der Energiefluss vom ersten Anschluss 10 zum zweiten Anschluss 24, so arbeitet die Schaltung als Tiefsetzsteller. Wenn das erste Schaltelement 14g eingeschaltet ist, fließt Strom vom ersten Anschluss 10 durch dieses erste Schaltelement 14g und die Drossel 12 zum zweiten Anschluss 24, wobei in der Drossel 12 Energie zwischengespeichert wird. Wenn das zweite Schaltelement 14h eingeschaltet ist, fließt der Drosselstrom über dieses zweite Schaltelement 14h weiter, wobei die Drossel 12 die zuvor zwischengespeicherte Energie an den zweiten Anschluss 24 abgibt.

Erfolgt der Energiefluss hingegen vom zweiten Anschluss 24 zum ersten Anschluss 10, so arbeitet die Schaltung als Hochsetzsteller. Wenn das zweite Schaltelement 14h eingeschaltet ist, fließt Strom vom zweiten Anschluss 24 durch die Drossel 12 und das zweite Schaltelement 14h, wobei in der Drossel 12 Energie zwischengespeichert wird. Wenn dagegen das erste Schaltelement 14g eingeschaltet ist, fließt der Drosselstrom über dieses erste Schaltelement 14g weiter zum ersten Anschluss 10, wobei die Drossel 12 die zuvor zwischengespeicherte Energie an den Anschluss 10 abgibt.

Das Tastverhältnis der beiden Schaltelemente 14g, 14h wird über eine Steuereinheit so gewählt, dass sich die gewünschte Spannung bzw. der gewünschte Strom am ersten oder zweiten Anschluss 10, 24 einstellt.

Bei jedem Schaltvorgang der Schaltelemente 14g, 14h treten unvermeidbar Schaltverluste auf. Ist die Spannung am ersten Anschluss 10 nur wenig höher als die Spannung am zweiten Anschluss 24, so wird das zweite Schaltelement 14h üblicherweise nur sehr kurz eingeschaltet, wodurch die Schaltverluste in Relation zum Effekt des kurzen Einschaltens sehr hoch sind.

Die DE 197 00 100 A1 offenbart einen Tiefsetzsteller, bei welchem eine erste Reihenschaltung aus zwei Symmetrierungskondensatoren parallel zujr Eingangsseite geschaltet ist und eine zweite Reihenschaltung aus zwei Symmetrierungskondensatoren parallel zur Ausgangsseite geschaltet ist, wobei die Mittelpunkte zwischen den Symmetrierungskondensatoren miteinander verbunden sind, um eine Zwangssymmetrierung zu erreichen. Außerdem ist der eine Pol der Eingangsseite über einen ersten Halbleiterschalter und eine erste Speicherdrossel mit dem Pluspol der Ausgangsseite verbunden und ist der andere Pol der Eingangsseite über einen zweiten Halbleiterschalter und eine zweite Speicherdrossel mit dem Minuspol der Ausgangsseite verbunden.

Fig. 10 zeigt einen dualen Hochsetzsteller wie er zum Beispiel in der DE 10 2008 050 402 A1 offenbart ist. Dieser herkömmliche Hochsetzsteller wird aus zwei als Eingänge dienenden, ersten Anschlüssen 10a, 10b (nachfolgend auch duale Eingänge genannt) gespeist, die vorzugsweise symmetrisch betrieben werden. Die ersten Anschlüsse 10a, 10b sind mittels des Schaltelements 44 in Serie und über die Gleichrichtelemente 46a, 46b parallel betreibbar.

Bei statischer Parallelschaltung der dualen Eingänge 10a, 10b ist die Spannung an dem als Ausgang dienenden, zweiten Anschluss 24 (nachfolgend auch als Einzelanschluss bezeichnet) gleichgroß wie an den dualen Eingängen. Bei statischer Serienschaltung ergibt sich eine Spannungsverdopplung. Bei getaktetem Betrieb des Schaltelements 44 wird in schneller Folge zwischen Serien- und Parallelschaltung gewechselt. Die Spannung am Einzelanschluss 24 liegt dann je nach Tastverhältnis zwischen 100% und 200% der Spannung an den dualen Eingängen 10a, 10b.

Da sowohl bei Serienschaltung als auch bei Parallelschaltung Energie von den dualen Eingängen 10a, 10b zum Einzelanschluss 24 fließt, ist die zirkulierende Blindleistung sehr gering. Deshalb ergibt sich ein sehr hoher Wirkungsgrad bei gleichzeitig verringertem Bauvolumen der Drosseln 12a, 12b. Bei einem derartigen Hochsetzsteller kann aber die Spannung an den dualen Eingängen 10a, 10b nicht höher werden als die Spannung am Einzelanschluss 24.

Der Erfindung liegt die Aufgabe zugrunde, einen verbesserten Gleichspannungswandler mit dualen ersten Anschlüssen und einem zweiten Einzelanschluss zu schaffen, welcher möglichst geringe Schaltverluste aufweist und bei welchem die Spannung an den dualen ersten Anschlüssen auch höher als am zweiten Einzelanschluss sein kann.

Diese Aufgabe wird gelöst durch einen Gleichspannungswandler mit den Merkmalen des Anspruchs 1. Vorteilhafte Ausgestaltungen und Weiterbildungen der Erfindung sind Gegenstand der abhängigen Ansprüche.

Der erfindungsgemäße Gleichspannungswandler weist wenigstens zwei erste Anschlüsse und wenigstens einen zweiten Anschluss auf, wobei ein Energiefluss zwischen den wenigstens zwei ersten Anschlüssen einerseits und dem wenigstens einen zweiten Anschluss andererseits möglich ist und die zwei ersten Anschlüsse eine gleichgroße oder höhere Spannung aufweisen als der zweite Anschluss.

Der Gleichspannungswandler enthält wenigstens eine erste Drossel, welche mit einem ersten Pol des zweiten Anschlusses verbunden ist, und wenigstens eine zweite Drossel, welche mit einem zweiten Pol des zweiten Anschlusses verbunden ist. Der Gleichspannungswandler der Erfindung enthält ferner wenigstens eine erste Schaltvorrichtung, welche in Serie zu der ersten Drossel geschaltet ist, wobei der eine der ersten Anschlüsse über diese Serienschaltung der ersten Schaltvorrichtung und der ersten Drossel zu dem zweiten Anschluss parallel geschaltet ist, und wenigstens eine zweite Schaltvorrichtung, welche in Serie zu der zweiten Drossel geschaltet ist, wobei der andere der ersten Anschlüsse über diese Serienschaltung der zweiten Schaltvorrichtung und der zweiten Drossel zu dem zweiten Anschluss parallel geschaltet ist. Schließlich weist der Gleichspannungswandler der Erfindung auch wenigstens eine dritte Schaltvorrichtung auf, über welche die von dem zweiten Anschluss abgewandten Pole der ersten und der zweiten Drossel miteinander verbunden sind. Außerdem ist ein Pluspol des einen der ersten Anschlüsse mit einem Pluspol des zweiten Anschlusses verbunden und ist ein Minuspol des anderen der ersten Anschlüsse mit einem Minuspol des zweiten Anschlusses verbunden.

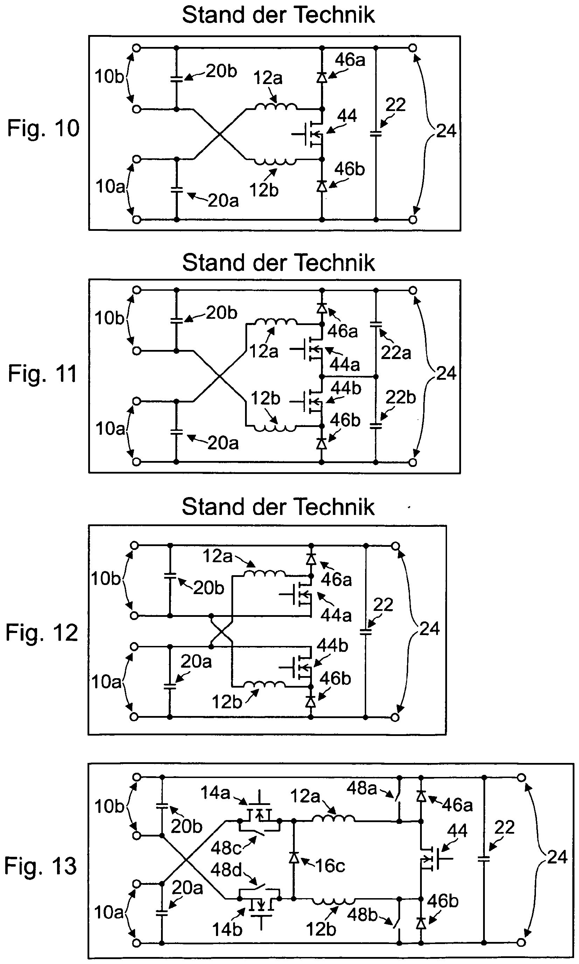

Diese Schaltungstopologie hat geringere Schaltverluste als ein herkömmlicher Gleichspannungswandler, wie er zum Beispiel in Fig. 1 veranschaulicht ist. Andererseits schafft die erfindungsgemäße Schaltungstopologie im Gegensatz zu einem herkömmlichen Hochsetzsteller mit dualen Eingängen, wie er zum Beispiel in Fig. 10 veranschaulicht ist, die Möglichkeit, dass die Spannung an den dualen ersten Anschlüssen höher ist als an dem zweiten Einzelanschluss.

Der erfindungsgemäße Gleichspannungswandler ist dadurch gekennzeichnet, dass ein Pluspol des einen der ersten Anschlüsse mit einem Pluspol des zweiten Anschlusses verbunden ist und ein Minuspol des anderen der ersten Anschlüsse mit einem Minuspol des zweiten Anschlusses verbunden ist, und dass der eine der ersten Anschlüsse über die erste Schaltvorrichtung und die erste Drossel zu dem zweiten Anschluss parallel geschaltet ist und der andere der ersten Anschlüsse über die zweite Schaltvorrichtung und die zweite Drossel zu dem zweiten Anschluss parallel geschaltet ist. Mit dieser Konfiguration können in vorteilhafter Weise Funkstörungen reduziert werden.

Gemäß der Erfindung sind die dem zweiten Einzelanschluss abgewandten Pole über eine (z.B. einzige) dritte Schaltvorrichtung miteinander verbunden. Die Funktion des Gleichspannungswandlers ist deshalb wie folgt.

Die dualen ersten Anschlüsse werden vorzugsweise symmetrisch betrieben. Wenn die erste oder die zweite Schaltvorrichtung leitet, besteht eine leitende Verbindung zwischen dem jeweiligen ersten Anschluss über die erste bzw. die zweite Drossel zum zweiten Anschluss, wobei die jeweilige Drossel Energie aufnehmen oder abgeben kann. Wenn die dritte Schaltvorrichtung leitet, besteht eine leitende Verbindung zwischen den Polen des zweiten Anschlusses über die beiden Drosseln, wobei die Drosseln Energie aufnehmen oder abgeben können. Die erste und die zweite Schaltvorrichtung leiten vorzugsweise gleichzeitig, während die dritte Schaltvorrichtung sperrt, und umgekehrt.

Durch die erfindungsgemäße Serienschaltung der beiden Drosseln über die dritte Schaltvorrichtung und die daraus folgende Spannungsteilung ist der Spannungshub an den beiden Drosseln im Vergleich zum herkömmlichen bidirektionalen Gleichspannungswandler (z.B. nach Fig. 1) deutlich verringert. Dadurch ergeben sich verschiedene Vorteile wie verringerte Schaltverluste, höherer Wirkungsgrad und einfachere Kühlung.

Die genannten ersten, zweiten und/oder dritten Schaltvorrichtungen weisen bevorzugt (jeweils) wenigstens ein Schaltelement und/oder wenigstens ein Gleichrichtelement auf.

Die beiden Drosseln des Gleichspannungswandlers können wahlweise separat zueinander sein oder miteinander gekoppelt sein.

Die ersten Anschlüsse des Gleichspannungswandlers können wahlweise symmetrisch oder asymmetrisch betrieben werden.

In einer vorteilhaften Ausgestaltung der Erfindung weisen die ersten, zweiten und/oder dritte Schaltvorrichtungen (jeweils) wenigstens ein Halbleiterelement auf, welches getaktet betreibbar ist.

In diesem Fall kann eine Steuereinrichtung vorhanden sein, welche den Strom und/oder die Spannung an einer oder mehreren Stellen im Gleichspannungswandler steuert oder regelt, indem sie mindestens eine der Schaltvorrichtungen getaktet ansteuert.

Die ersten, zweiten und dritten Schaltvorrichtungen des Gleichspannungswandlers können dabei wahlweise mit fester oder mit variabler Frequenz getaktet werden.

In einer vorteilhaften Ausführungsform der Erfindung sind die dem zweiten Anschluss abgewandten Pole der ersten und der zweiten Drossel über wenigstens zwei in Serie geschaltete dritte Schaltvorrichtungen miteinander verbunden und ist ein gemeinsamer Verbindungspunkt dieser wenigstens zwei dritten Schaltvorrichtungen mit einem Hilfspotenzial verbunden. Durch diese Entkopplung mittels des Hilfspotenzials können die ersten und zweiten Schaltvorrichtungen zum Beispiel problemlos asynchron betrieben werden.

Dieses Hilfspotenzial kann mittels wenigstens einer Kapazität (z.B. Kondensator) bereitgestellt werden, welche mit einem Pol des zweiten Anschlusses verbunden ist. Alternativ oder zusätzlich kann das Hilfspotenzial auch von einer Gleichspannungsquelle oder einem Verbraucher bereitgestellt werden, welche(r) mit dem zweiten Anschluss verbunden ist.

In einer weiteren vorteilhaften Ausgestaltung der Erfindung ist parallel zu den ersten und/oder den zweiten Anschlüssen (jeweils) wenigstens ein Pufferkondensator geschaltet. Mit diesen Pufferkondensatoren können zum Beispiel Rippleströme gepuffert werden.

Wenn alle Schaltvorrichtungen des Gleichspannungswandlers als Schaltelemente ausgeführt sind, ist ein bidirektionaler Energiefluss zwischen den ersten Anschlüssen und dem zweiten Anschluss möglich. Wenn die Schaltvorrichtungen hingegen teilweise als passive Gleichrichtelemente ausgeführt sind, kann der Energiefluss auf eine bestimmte Richtung eingeschränkt werden. Der Gleichspannungswandler arbeitet dann als reiner Hochsetzsteller oder als reiner Tiefsetzsteller.

In einer vorteilhaften Ausgestaltung der Erfindung kann der erfindungsgemäße Gleichspannungswandler mit einem dualen Tiefsetzsteller oder einem dualen Hochsetzsteller zu einem hochtiefsetzenden Gleichspannungswandler kombiniert werden.

Auf diese Weise ist es möglich, hochtiefsetzende Weitbereichswandler mit einem über den gesamten Betriebsspannungsbereich fast konstanten, sehr hohem Wirkungsgrad bei gleichzeitig stark reduziertem Aufwand zu bauen. Diese Weitbereichswandler eignen sich z.B. zum Einsatz in Solarwechselrichtern, um die variable Spannung von Solargeneratoren auf eine näherungsweise konstante Spannung umzusetzen und damit einen Wechselrichter zu betreiben. Dadurch kann eine Überdimensionierung des Wechselrichters vermieden und der Wechselrichter mit optimalem Wirkungsgrad betrieben werden.

Beim Vergleich des erfindungsgemäßen Gleichspannungswandlers mit dualen Hoch- bzw. Tiefsetzstellern fällt auf, dass sowohl die beiden Drosseln als auch die Kondensatoren an den Anschlüssen in beiden Konfigurationen vorhanden sind und sich auch an den gleichen Positionen befinden. Um einen Weitbereichswandler zu erhalten, müssen daher nur noch diejenigen Schaltelemente und Gleichrichtelemente, welche nur in den dualen Hoch- bzw. Tiefsetzstellern enthalten sind, hinzugefügt werden, was einen verhältnismäßig geringen Aufwand bedeutet.

So kann der erfindungsgemäße Gleichspannungswandler in seiner Ausprägung als Tiefsetzsteller mit einem dualen Hochsetzsteller kombiniert werden. Auf diese Weise entsteht ein dualer Hoch-Tiefsetzsteller, welcher zwei Eingänge und einen Ausgang aufweist. Dieser eignet sich z.B. zur Speisung eines Wechselrichters aus zwei Solargeneratoren.

Als duale Hochsetzsteller eignen sich zum Beispiel die Schaltungstopologien, welche in der DE 10 2008 050 402 A1, der nachveröffentlichten DE 10 2010 006 124 A1 und der nachveröffentlichten DE 10 2011 011 329 A1 der gleichen Anmelderin beschrieben sind, ohne dass die vorliegende Erfindung auf diese Kombinationen beschränkt sein soll.

In analoger Weise kann der erfindungsgemäße Gleichspannungswandler in seiner Ausprägung als Hochsetzsteller mit einem dualen Tiefsetzsetzsteller kombiniert werden. So entsteht ein dualer Hoch-Tiefsetzsteller, welcher einen Eingang und zwei Ausgänge aufweist. Dieser eignet sich z.B. zur Speisung von zwei Wechselrichtern aus einem Solargenerator.

Als duale Tiefsetzsteller eignen sich zum Beispiel die Schaltungstopologien, welche in der nachveröffentlichten DE 10 2011 011 330 A1 der gleichen Anmelderin beschrieben sind, ohne dass die vorliegende Erfindung auf diese Kombinationen beschränkt sein soll.

In einer vorteilhaften Ausgestaltung der Erfindung können die ersten Anschlüsse des oben beschriebenen Gleichspannungswandlers jeweils aus wenigstens einer Sekundärwicklung eines Transformators gespeist werden. Auf diese Weise kann ein Wandler mit Potenzialtrennung und hohem Wirkungsgrad geschaffen werden.

Bei dieser Ausgestaltung kann ferner bevorzugt in Serie zu den Sekundärwicklungen jeweils wenigstens eine zusätzliche Sekundärwicklung vorgesehen sein, welche jeweils mit wenigstens einer zusätzlichen Schaltvorrichtung in Serie geschaltet ist. Mit dieser Konfiguration kann ein Gegentaktbetrieb des Transformators ermöglicht werden.

Außerdem kann bei dieser Ausgestaltung bevorzugt eine Primärseite des Transformators aus einer Baugruppe gespeist werden, welche den Transformator mit einer Wechselspannung ansteuert.

Der oben beschriebene Gleichspannungswandler der Erfindung bzw. die oben beschriebenen Schaltungsanordnungen mit einem solchen Gleichspannungswandler eignen sich in vorteilhafter Weise zum Einsatz in Wechselrichterschaltungen, insbesondere in Solarwechselrichterschaltungen, mit wenigstens einem Wechselrichter.

Es können auch zwei oder mehr erfindungsgemäße Gleichspannungswandler parallel oder in Serie geschaltet werden.

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich. Darin zeigen:
- Fig. 1: ein schematisches Blockschaltbild des Aufbaus eines bidirektionalen DC/DC-Wandlers nach dem Stand der Technik;
- Fig. 2: ein schematisches Blockschaltbild des Aufbaus einer ersten Ausführungsform des erfindungsgemäßen DC/DC-Wandlers (ohne Hilfspotenzial);
- Fig. 3: ein schematisches Blockschaltbild des Aufbaus einer zweiten Ausführungsform des erfindungsgemäßen DC/DC-Wandlers (mit Hilfspotenzial);
- Fig. 4: ein schematisches Blockschaltbild des Aufbaus einer dritten Ausführungsform des erfindungsgemäßen DC/DC-Wandlers (als Hochsetzsteller);
- Fig. 5: ein schematisches Blockschaltbild des Aufbaus einer vierten Ausführungsform des erfindungsgemäßen DC/DC-Wandlers (als Tiefsetzsteller);
- Fig. 6: ein schematisches Blockschaltbild des Aufbaus einer fünften Ausführungsform des erfindungsgemäßen DC/DC-Wandlers (mit Transformator);
- Fig. 7: ein schematisches Blockschaltbild des Aufbaus einer sechsten Ausführungsform des erfindungsgemäßen DC/DC-Wandlers (mit Transformator);
- Fig. 8: ein schematisches Blockschaltbild des Aufbaus einer ersten Ausführungsform einer Wechselrichterschaltung mit einem erfindungsgemäßem DC/DC-Wandler, welcher als Hochsetzsteller arbeitet;
- Fig. 9: ein schematisches Blockschaltbild des Aufbaus einer zweiten Ausführungsform einer Wechselrichterschaltung mit einem erfindungsgemäßen DC/DC-Wandler, welcher als Tiefsetzsteller arbeitet;
- Fig. 10: ein schematisches Blockschaltbild des Aufbaus eines bekannten dualen Hochsetzstellers;
- Fig. 11: ein schematisches Blockschaltbild des Aufbaus eines weiteren bekannten dualen Hochsetzstellers;
- Fig. 12: ein schematisches Blockschaltbild des Aufbaus eines weiteren bekannten dualen Hochsetzstellers;
- Fig. 13: ein schematisches Blockschaltbild des Aufbaus einer beispielhaften Schaltungskombination eines erfindungsgemäßen DC/DC-Wandlers mit einem dualen Hochsetzsteller;
- Fig. 14: ein schematisches Blockschaltbild des Aufbaus eines bekannten dualen Tiefsetzstellers;
- Fig. 15: ein schematisches Blockschaltbild des Aufbaus eines weiteren bekannten dualen Tiefsetzstellers;
- Fig. 16: ein schematisches Blockschaltbild des Aufbaus eines weiteren bekannten dualen Tiefsetzstellers; und
- Fig. 17: ein schematisches Blockschaltbild des Aufbaus einer beispielhaften Schaltungskombination eines erfindungsgemäßen DC/DC-Wandlers mit einem dualen Tiefsetzsteller.

Fig. 2 zeigt eine erste Ausführungsform des erfindungsgemäßen DC/DC-Wandlers. Grundlegende Funktionen und mögliche Ausgestaltungen in Detailfragen werden anhand dieses Ausführungsbeispiels nachfolgend näher erläutert.

Der DC/DC-Wandler hat insgesamt drei Anschlüsse, zwei erste Anschlüsse 10a, 10b und einen zweiten Anschluss 24.

Eine erste Drossel 12a ist mit dem Pluspol des zweiten Anschlusses 24 verbunden und eine zweite Drossel 12b ist mit dem Minuspol des zweiten Anschlusses 24 verbunden. Der eine erste Anschluss 10a ist über die erste Schaltvorrichtung 13a und die erste Drossel 12a parallel mit dem zweiten Anschluss 24 verbunden. In analoger Weise ist der andere erste Anschluss 10b über die zweite Schaltvorrichtung 13b und die zweite Drossel 12b parallel mit dem zweiten Anschluss 24 verbunden.

Die dem zweiten Anschluss 24 abgewandten Pole der Drosseln 12a, 12b sind über eine dritte Schaltvorrichtung 13c verbunden. Die Schaltvorrichtungen 13a, 13b, 13c können Schaltelemente wie MOSFETs oder IGBTs oder auch Gleichrichtelemente wie Dioden enthalten, wie später noch erläutert wird. Im Fall von Schaltelementen können intern oder extern Freilaufdioden antiparallel geschaltet sein. Diese schützen die Schaltelemente vor Rückwärtsspannungen bzw. ermöglichen einen Freilauf. Zur Verringerung der Schaltverluste können zusätzlich Mittel vorgesehen sein, welche das Schalten der Schaltvorrichtungen 13a, 13b, 13c im Strom- oder/und Spannungsnulldurchgang ermöglichen.

Die Kapazitäten bzw. Kondensatoren 20a, 20b und 22 an den ersten und zweiten Anschlüssen 10a, 10b, 24 dienen zur Pufferung von Rippleströmen.

Die ersten und zweiten Drosseln 12a, 12b können wahlweise separat oder gekoppelt sein.

Die Gleichspannungen an den ersten Anschlüssen 10a, 10b sind gleichgroß oder größer als die Spannung am zweiten Anschluss 24.

Die ersten Anschlüsse 10a, 10b werden vorzugsweise symmetrisch betrieben, d.h. ihre Spannungen sind im Wesentlichen gleichgroß. Es ist aber auch ein unsymmetrischer Betrieb denkbar.

Der DC/DC-Wandler überträgt Energie zwischen den ersten Anschlüssen 10a, 10b einerseits und dem zweiten Anschluss 24 andererseits. Der Energiefluss kann in beide Richtungen (bidirektional) erfolgen. Je nach Betriebsrichtung liegt entweder jeweils an den ersten Anschlüssen 10a, 10b oder an dem zweiten Anschluss 24 eine speisende Quelle. Als Quelle sind verschiedenste Gleichstromquellen denkbar, wie zum Beispiel Solargeneratoren, Brennstoffzellen, thermoelektrische Generatoren, Akkus, Batterien, Superkondensatoren, elektromagnetische Generatoren, AC/DC-Wandler, DC/DC-Wandler und dergleichen.

An der der speisenden Seite gegenüber liegenden Seite können Verbraucher angeschlossen werden. Als Verbraucher sind auch Baugruppen möglich, welche die Energie weiterreichen, z.B. Wechselrichter oder Batterieladegeräte.

Erfolgt der Energiefluss von den ersten Anschlüssen 10a, 10b zum zweiten Anschluss 24, so arbeitet die Schaltung als Tiefsetzsteller. Erfolgt der Energiefluss hingegen vom zweiten Anschluss 24 zu den ersten Anschlüssen 10a, 10b, so arbeitet die Schaltung als Hochsetzsteller. Es ist auch denkbar, dass der DC/DC-Wandler seine Energieflussrichtung im Betrieb wechseln kann. Ein Einsatzbeispiel wäre z.B. ein bidirektionaler Energietransfer zwischen Akkus oder zwischen Kondensatoren, um die gespeicherten Ladungen zu balancieren.

Die ersten und zweiten Schaltvorrichtungen 13a, 13b werden vorzugsweise synchron und im Wechsel mit der dritten Schaltvorrichtung 13c periodisch ein- und ausgeschaltet. Es muss verhindert werden, dass alle drei Schaltvorrichtungen 13a, 13b, 13c gleichzeitig leiten, da in diesem Fall die ersten Anschlüsse 10a, 10b in Serie zueinander und parallel zum zweiten Anschluss 24 geschaltet würden, wodurch in der Regel ein Kurzschluss entstehen würde.

Sind die erste und die zweite Schaltvorrichtung 13a, 13b dauerhaft eingeschaltet, so sind die ersten Anschlüsse 10a, 10b statisch mit dem zweiten Anschluss 24 verbunden. Im Wesentlichen liegt dann an allen Anschlüssen 10a, 10b, 24 die gleiche Spannung an. Bei statischem Betrieb können Bauteile überbrückt werden, um den Wirkungsgrad zu steigern. Zum Beispiel können alle drei Anschlüsse 10a, 10b, 24 mittels Relaiskontakten direkt miteinander verbunden werden.

Bei getaktet angesteuerten Schaltvorrichtungen 13a, 13b, 13c geschieht dagegen Folgendes.

Ist die dritte Schaltvorrichtung 13c geschlossen, so sind die beiden Drosseln 12a, 12b in Serie mit dem zweiten Anschluss 24 verbunden. Im darauffolgenden Moment wird die dritte Schaltvorrichtung 13c geöffnet und die erste und die zweite Schaltvorrichtung 13a, 13b schließen. Wegen der Selbstinduktion ergibt sich jetzt an den beiden Drosseln 12a, 12b eine Spannung mit umgekehrtem Vorzeichen. Das Potenzial am Pluspol des ersten Anschlusses 10a ist deshalb höher als das Potenzial am Pluspol des zweiten Anschlusses 24. Analog ist das Potenzial am Minuspol des ersten Anschlusses 10b niedriger als das Potenzial am Minuspol des zweiten Anschlusses 24. Das heißt, die Spannungen an den ersten Anschlüssen 10a, 10b sind höher als die Spannung am zweiten Anschluss 24.

Je höher die relative Einschaltdauer der dritten Schaltvorrichtung 13c ist, desto größer werden die Spannungen an den ersten Anschlüssen 10a, 10b. Wird die dritte Schaltvorrichtung 13c nahezu 100% der Zeit eingeschaltet, so kann die Spannung an den ersten Anschlüssen 10a, 10b theoretisch beliebig groß gemacht werden.

Das Tastverhältnis der Schaltvorrichtungen 13a, 13b, 13c wird über eine Steuereinrichtung (nicht dargestellt) zum Beispiel so geregelt, dass die gewünschte Spannung oder der gewünschte Strom an einem oder mehreren der Anschlüsse 10a, 10b, 24 entsteht.

Die Ansteuerung der Schaltvorrichtungen 13a, 13b, 13c kann dabei mit fester oder mit variabler Frequenz erfolgen.

Ist die Spannung an den ersten Anschlüssen 10a, 10b nur geringfügig höher als die Spannung am zweiten Anschluss 24, so kann zum Beispiel die Frequenz abgesenkt werden, um die Schaltverluste zu verringern.

Durch die Serienschaltung der beiden Drosseln 12a, 12b über die dritte Schaltvorrichtung 13c und die daraus folgende Spannungsteilung ist der Spannungshub an den beiden Drosseln 12a, 12b im Vergleich zum herkömmlichen bidirektionalen DC/DC-Wandler nach Fig. 1 deutlich verringert. Dadurch ergeben sich verringerte Schaltverluste und im Ergebnis ein besserer Wirkungsgrad.

Da die ersten Anschlüsse 10a, 10b an ihrem positiven bzw. negativen Pol mit dem zweiten Anschluss 24 verbunden sind, treten im Betrieb keine Potenzialsprünge der Anschlüsse gegeneinander auf, wodurch Funkstörungen stark vermindert werden können.

Es ist auch denkbar, die Schaltvorrichtungen 13a, 13b jeweils in die Verbindung zwischen den ersten Anschlüssen 10a, 10b mit dem zweiten Anschluss 24 zu verlegen oder dort zusätzliche Schaltvorrichtungen zu installieren. Dadurch ergeben sich aber in der Regel im getakteten Betrieb Potenzialsprünge an den ersten Anschlüssen 10a, 10b gegenüber dem zweiten Anschluss 24.

Zwei oder mehr der erfindungsgemäßen DC/DC-Wandler können parallel geschaltet werden. In diesem Fall können die einzelnen DC/DC-Wandler phasenversetzt betrieben werden, um die Rippleströme zu verringern (Multiphase-Betrieb). Außerdem können bei Teillast einzelne DC/DC-Wandler ganz abgeschaltet werden, um den Teillastwirkungsgrad zu erhöhen. Es ist auch möglich, zwei oder mehr DC/DC-Wandler in Serie zu schalten oder zu kaskadieren.

Im Folgenden werden verschiedene weitere Ausführungsformen des DC/DC-Wandlers der Erfindung beschrieben, wobei aber im Wesentlichen nur noch deren besondere Eigenschaften beschrieben werden. Trotzdem sind natürlich auch bei diesen weiteren Ausführungsformen - wie für den Fachmann leicht erkennbar - die oben in Zusammenhang mit Fig. 2 erläuterten Detaillösungen umsetzbar.

Fig. 3 zeigt eine zweite Ausführungsform des erfindungsgemäßen DC/DC-Wandlers. Anstelle der einen Schaltvorrichtung 13c der Grundform von Fig. 2 sind nun zwei Schaltvorrichtungen 13d und 13e vorgesehen, die in Serie geschaltet sind. Der gemeinsame Verbindungspunkt dieser beiden Schaltvorrichtungen 13d, 13e ist mit einem Hilfspotenzial verbunden.

Dieses Hilfspotenzial liegt vorzugsweise symmetrisch in der Mitte zwischen den beiden Potenzialen des zweiten Anschlusses 24. Das Hilfspotenzial kann zum Beispiel durch einen Kondensator oder eine Kondensatorhalbbrücke (22a, 22b) bereitgestellt werden. Es kann auch aus der Quelle bzw. dem Verbraucher abgeleitet werden, welcher am zweiten Anschluss 24 angeschlossen ist.

Durch das Hilfspotenzial ist die Spannungsbelastung, welche an den Schaltvorrichtungen 13d, 13e auftritt, geringer. Die Schaltvorrichtungen 13a, 13d können problemlos asynchron zu den Schaltvorrichtungen 13b, 13e getaktet werden, weil das Hilfspotenzial für eine Entkopplung sorgt. Bei unterschiedlichen Tastverhältnissen an den Schaltvorrichtungen 13a und 13b bzw. 13d und 13e ist es möglich, die ersten Anschlüsse 10a, 10b unsymmetrisch zu betreiben. Bei unterschiedlichen Tastverhältnissen und asynchronem Betrieb ist allerdings eine Kopplung der Drosseln 12a, 12b in der Regel ungünstig.

Im Übrigen entspricht die Schaltungstopologie dieses Ausführungsbeispiels der in Fig. 2 dargestellten Grundform des erfindungsgemäßen DC/DC-Wandlers.

Fig. 4 zeigt eine dritte Ausführungsform des erfindungsgemäßen DC/DC-Wandlers.

Wenn es beabsichtigt ist, Energie nur in der Richtung vom zweiten Anschluss 24 zu den ersten Anschlüssen 10a, 10b zu übertragen, so können die erste und die zweite Schaltvorrichtung 13a, 13b jeweils durch ein Gleichrichtelement 16a, 16b gebildet werden. Die dritte Schaltvorrichtung 13c muss aktiv getaktet werden können, d.h. sie muss ein Schaltelement 14c aufweisen.

Anstelle oder zusätzlich zu den Gleichrichtelementen 16a, 16b können aber auch Schaltelemente als Synchrongleichrichter verwendet werden, um den Wirkungsgrad zu steigern.

Im Übrigen entspricht die Schaltungstopologie dieses Ausführungsbeispiels der in Fig. 2 dargestellten Grundform des erfindungsgemäßen DC/DC-Wandlers. Außerdem ist diese Ausführungsform von Fig. 4 mit der Schaltungstopologie des zweiten Ausführungsbeispiels mit zwei in Serie geschalteten dritten Schaltvorrichtungen und Hilfspotenzial kombinierbar.

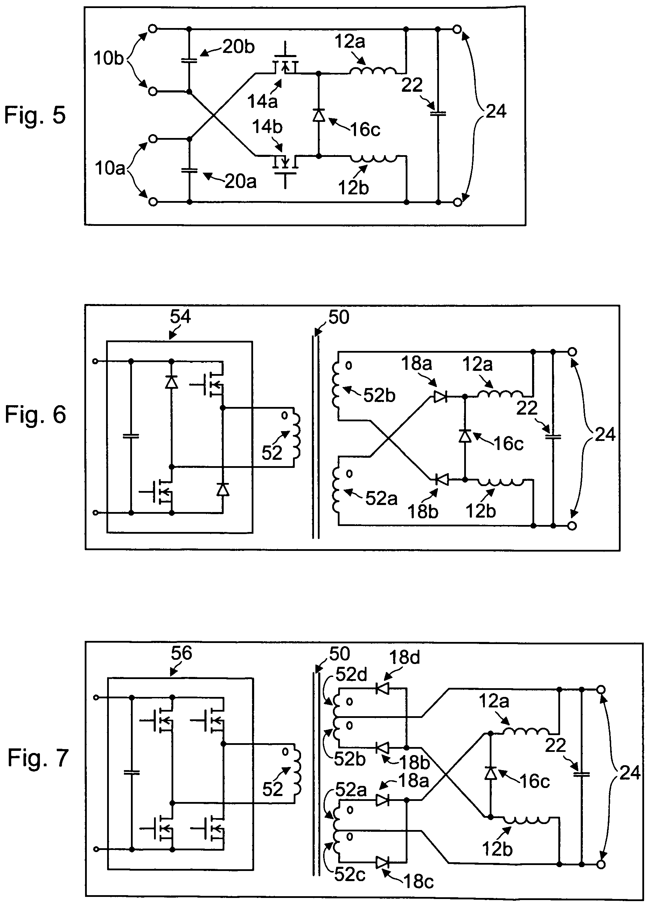

Fig. 5 zeigt eine vierte Ausführungsform des erfindungsgemäßen DC/DC-Wandlers.

Wenn es beabsichtigt ist, Energie nur in der einen Richtung von den ersten Anschlüssen 10a, 10b zum zweiten Anschluss 24 zu übertragen, so kann die dritte Schaltvorrichtung 13c durch ein Gleichrichtelement 16c gebildet werden. Die ersten und zweiten Schaltvorrichtungen 13a, 13b müssen dann aktiv taktbar sein, d.h. sie müssen Schaltelemente 14a, 14b aufweisen.

Im Übrigen entspricht die Schaltungstopologie dieses Ausführungsbeispiels der in Fig. 2 dargestellten Grundform des erfindungsgemäßen DC/DC-Wandlers. Außerdem ist diese Ausführungsform von Fig. 5 ebenfalls mit der Schaltungstopologie des zweiten Ausführungsbeispiels mit zwei in Serie geschalteten dritten Schaltvorrichtungen und Hilfspotenzial kombinierbar.

Fig. 6 zeigt eine fünfte Ausführungsform des erfindungsgemäßen DC/DC-Wandlers. In diesem Ausführungsbeispiel ist der DC/DC-Wandler analog zu Fig. 5 als reiner Tiefsetzsteller ausgeführt. Die Ausführungsform von Fig. 6 ist aber in gleicher Weise auch auf die anderen Ausführungsformen des DC/DC-Wandlers übertragbar.

Anstelle von Gleichspannungen, welche im Beispiel nach Fig. 5 an den ersten Anschlüssen 10a, 10b zugeführt und mittels der Schaltelemente 14a, 14b getaktet werden, werden nun vorzugsweise rechteckförmige Wechselspannungen zugeführt. Diese Wechselspannungen werden von den Sekundärwicklungen 52a, 52b eines Transformators bzw. Trafos 50 bereitgestellt.

Solange die Rechteckspannungen positiv sind, können diese mittels Schaltvorrichtungen (wie 13a, 13b in Fig. 2) bzw. Schaltelementen (wie 14a, 14b in Fig. 5) auf die Drosseln 12a, 12b durchgeschaltet werden. Der DC/DC-Wandler arbeitet also prinzipiell gleich wie die Schaltung nach Fig. 5.

In dem Ausführungsbeispiel von Fig. 6 sind die Schaltvorrichtungen 13a, 13b als passive Gleichrichtelemente 18a, 18b ausgeführt. Ist der Momentanwert der Wechselspannungen positiv, so leiten diese Gleichrichtelemente 18a, 18b, andernfalls sperren sie. Die Taktung des DC/DC-Wandlers wird somit durch die Wechselspannung selbst bewirkt.

Die Ansteuerung des Trafos 50 erfolgt über eine zusätzliche Baugruppe 54, welche die Primärwicklung 52 mit einer Wechselspannung speist. Die Baugruppe 54 enthält zum Beispiel einen Eintaktwandler, wie er in Fig. 6 angedeutet ist, und eine Steuereinheit zur Ansteuerung des Eintaktwandlers. Auf diese Weise kann der erfindungsgemäße DC/DC-Wandler in Verbindung mit einem Trafo 50 zur Potenzialtrennung eingesetzt werden.

Fig.7 zeigt eine sechste Ausführungsform des erfindungsgemäßen DC/DC-Wandlers. Die sechste Ausführungsform stellt im Wesentlichen eine Modifikation der fünften Ausführungsform nach Fig. 6 dar.

Im Unterschied zu Fig. 6 ist den beiden Sekundärwicklungen 52a, 52b an den ersten Anschlüssen jeweils eine weitere Wicklung 52c bzw. 52d in Serie geschaltet, welche ihrerseits über je ein Gleichrichtelement 18c bzw. 18d eine getaktete Spannung umgekehrter Polarität bereitstellt. Dadurch ist es möglich, den Trafo 50 im Gegentaktbetrieb zu nutzen, wodurch dieser besser ausgenutzt werden kann.

Die Baugruppe 56 zur Ansteuerung des Trafos 50 enthält daher einen Gegentaktwandler. In Fig. 7 ist dieser in Form eines Vollbrückenwandlers angedeutet.

Der DC/DC-Wandler der Erfindung kann neben der direkten Speisung von Gleichstromverbrauchern oder Gleichstromnetzen auch zur Speisung von Gleichspannungs-Zwischenkreisen in anderen Geräten wie z.B. Wechselrichtern genutzt werden.

Ein Wechselrichter braucht zur Erzeugung einer Wechselspannung in der Regel eine Zwischenkreisspannung bestimmter Höhe. Ein optimaler Wirkungsgrad wird erreicht, wenn die Zwischenkreisspannung genau auf die zu erzeugende Wechselspannung angepasst ist.

Wechselrichter werden häufig zur solaren Stromversorgung eingesetzt. Solargeneratoren liefern allerdings abhängig von Lichteinfall, Temperatur und Anzahl der verschalteten Module eine stark schwankende Gleichspannung. Je breiter der Bereich der EingangsGleichspannung ist, die ein Wechselrichter verarbeiten kann, desto mehr Möglichkeiten hat der Installateur, passende Solarmodulkombinationen zu finden. Ein EingangsspannungsBereich von 1:2 bei voller Last bzw. 1:2,5 von Volllast bis Leerlauf ist wünschenswert.

Zur Anpassung des Solargenerators an den Wechselrichter wird daher oft ein Hochsetzsteller oder ein Tiefsetzsteller verwendet. Dieser kann die variierende Gleichspannung des Solargenerators auf eine näherungsweise konstante Zwischenkreisspannung umsetzen. Es ist auch möglich, die Zwischenkreisspannung mit einem überlagerten Wechselanteil zu modulieren, was für die optimale Anpassung des Wechselrichters von Vorteil sein kann. Leider treten in einem Hochsetzsteller bzw. Tiefsetzsteller in der Regel zusätzliche Verluste auf, die den Gesamtwirkungsgrad des Wechselrichters verringern.

Der erfindungsgemäße DC/DC-Wandler ist für den Einsatz in Solarwechselrichtern geeignet. Gegenüber dem Stand der Technik nach Fig. 1 hat er einen höheren Wirkungsgrad. Gegenüber dem Stand der Technik nach Fig. 10 sind an den dualen Eingangsanschlüssen höhere Spannungen als am zweiten Einzelanschluss möglich. Die Potenziale an den Anschlüssen können konstant gehalten werden. Dies ist wichtig, weil das Potenzial eines Solargenerators aus Gründen der elektromagnetischen Verträglichkeit keine hochfrequenten Sprünge aufweisen sollte.

In Verbindung mit dem erfindungsgemäßen DC/DC-Wandler können verschiedene Wechselrichter-Topologien eingesetzt werden. Es können sowohl einphasige als auch mehrphasige Wechselrichter verwendet werden. Es können Wechselrichter zur Speisung von Inselnetzen oder zur Einspeisung in ein Stromnetz verwendet werden. Der DC/DC-Wandler kann dazu verwendet werden, ein Maximum-Power-Point-Tracking des Solargenerators auszuführen.

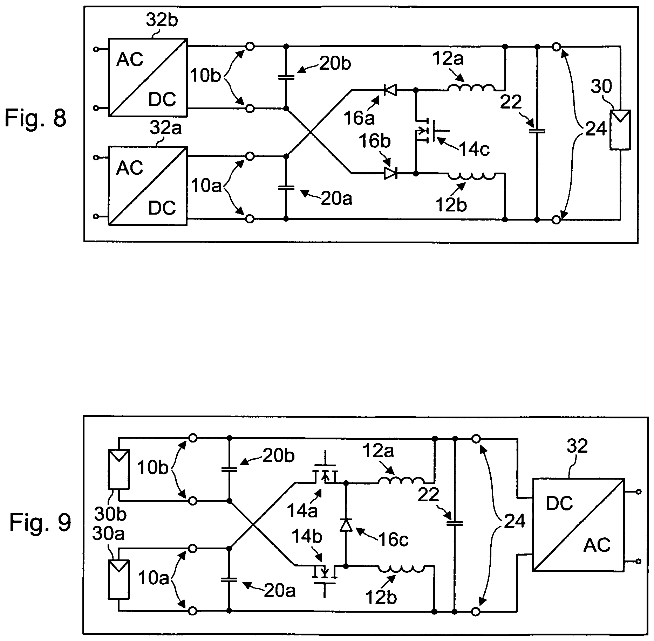

Fig. 8 zeigt eine erste Wechselrichteranordnung mit einem erfindungsgemäßen DC/DC-Wandler in einer Ausführung als Hochsetzsteller.

Mit dem zweiten Anschluss 24 des DC/DC-Wandlers ist ein Solargenerator 30 verbunden. Dessen variable Spannung wird mit Hilfe des DC/DC-Wandlers auf eine relativ konstante Spannung hochgesetzt, welche an den dualen ersten Anschlüssen 10a, 10b bereitgestellt wird. Diese können wegen ihrer Potenzialunterschiede nicht direkt parallelgeschaltet werden. Somit ist die bekannte Reihenschaltung aus einem Solargenerator, einem DC/DC-Wandler und einem Wechselrichter nicht anwendbar. Aus diesem Grund wird die Struktur des Solarwechselrichters so geändert, dass die an den ersten Anschlüssen 10a, 10b des DC/DC-Wandlers separat mit unterschiedlichen Potenzialen zur Verfügung gestellte Energie zusammengeführt werden kann.

An jedem der ersten Anschlüsse 10a, 10b ist ein separater Wechselrichter 32a bzw. 32b angeschlossen. Diese können über je einen separaten oder einen gemeinsamen Trafo in das Stromnetz einspeisen. Durch die transformatorische Kopplung können die Potenzialunterschiede zwischen den ersten Anschlüssen 10a, 10b überbrückt werden. Es ist möglich, dass die Wechselrichter 32a, 32b in verschiedene Phasen einspeisen.

Diese Lösung eignet sich beispielsweise, wenn die Netzeinspeisung ins Mittelspannungsnetz erfolgen soll, wozu ohnehin ein Mittelspannungstrafo benötigt wird.

Es sind aber auch weitere Möglichkeiten denkbar, um die an dualen Anschlüssen 10a, 10b bereitstehende Energie zusammenzuführen und in ein Wechselstromnetz einzuspeisen. Es wird in diesem Zusammenhang beispielhaft auf die nachveröffentlichte DE 10 2011 011 330 A1 verwiesen, auf deren gesamten Offenbarungsgehalt hierdurch vollinhaltlich Bezug genommen wird.

Fig. 9 zeigt eine zweite Wechselrichteranordnung mit einem erfindungsgemäßen DC/DC-Wandler in einer Ausführung als Tiefsetzsteller.

An den ersten Anschlüssen 10a, 10b sind Solargeneratoren 30a, 30b angeschlossen. Deren variable Spannung wird mit Hilfe des DC/DC-Wandlers auf eine relativ konstante Spannung tiefgesetzt, welche am zweiten Anschluss 24 bereitgestellt wird. Ein Wechselrichter 32, der mit dem zweiten Anschluss 24 verbunden ist, formt die bereitgestellte Gleichspannung in eine Wechselspannung um.

Der erfindungsgemäße DC/DC-Wandler kann des Weiteren in einer Ausprägung als Tiefsetzsteller in vorteilhafter Weise mit einem dualen Hochsetzsteller zu einem dualen hochtiefsetzenden Weitbereichswandler kombiniert werden.

Fig. 10 zeigt beispielhaft einen dualen Hochsetzsteller, wie er in der DE 10 2008 050 402 A1 offenbart ist. Fig. 11 zeigt einen artverwandten dualen Hochsetzsteller, wie er in der nachveröffentlichten DE 10 2010 006 124 A1 offenbart ist, und Fig. 12 zeigt einen weiteren artverwandten dualen Hochsetzsteller, wie er in der nachveröffentlichten DE 10 2011 011 329 A1 offenbart ist. Diese Hochsetzsteller werden jeweils aus zwei dualen Eingängen 10a, 10b gespeist, die periodisch in Serie und parallel geschaltet werden, und weisen einen sehr hohen Wirkungsgrad auf.

Auf die gesamten Offenbarungsgehalte der vorgenannten älteren Schutzrechtsanmeldungen wird hierdurch vollinhaltlich Bezug genommen.

Als Beispiel wird in Fig. 13 der als Tiefsetzsteller ausgeführte DC/DC-Wandler nach Fig. 2, wie er in Fig. 5 dargestellt ist, mit dem Hochsetzsteller nach Fig. 10 kombiniert. Kombinationen dieser oder anderer Ausführungsformen des erfindungsgemäßen DC/DC-Wandlers mit diesem oder anderen dualen Hochsetzstellern können auf analoge Weise erfolgen, was für den Fachmann leicht nachvollziehbar ist.

Die in Fig. 13 veranschaulichte Kombination entsteht durch das Einfügen der Gleichrichtelemente 46a, 46b und des Schaltelements 44 des dualen Hochsetzstellers in die Schaltung des erfindungsgemäßen DC/DC-Wandlers.

Optional können zusätzlich die Schalter 48a - 48d eingebaut werden. Diese können z.B. Relaiskontakte sein. Mit ihrer Hilfe können die Schaltelemente 14a, 14b und die Gleichrichtelemente 46a, 46b im statischen Ein-Zustand überbrückt werden, um Durchlassverluste zu vermeiden.

Der Aufwand für die Kombination beider Schaltungen ist also gering, da ein großer Teil der Bauelemente, vor allem die Drosseln 12a, 12b Bestandteil beider Schaltungen sind.

Die Funktion des so aufgebauten Weitbereichswandlers ist wie folgt.

Ist die Spannung an den ersten Anschlüssen 10a, 10b größer oder gleichgroß wie am zweiten Anschluss 24, so arbeitet der Weitbereichswandler wie für die Schaltungen in Fig. 2 und Fig. 5 beschrieben. Das Schaltelement 44 ist dauerhaft gesperrt und die Gleichrichtelemente 46a, 46b leiten bzw. können durch die Schalter 48a, 48b überbrückt werden.

Durch die Erweiterung mit den Elementen des dualen Hochsetzstellers nach Fig. 10 ist es möglich, die Spannungen an den ersten Anschlüssen 10a, 10b nicht nur tiefzusetzen, sondern auch bis zum Faktor 2 hochzusetzen. Dazu werden die Schaltelemente 14a, 14b statisch geschlossen bzw. mittels der Schalter 48c, 48d überbrückt. Die Anordnung arbeitet nun wie der Hochsetzsteller nach Fig. 10.

Beträgt die Spannung an den ersten Anschlüssen 10a, 10b etwa 50% der Spannung am zweiten Anschluss 24, so wird das Schaltelement 44 statisch geschlossen. Die Anschlüsse 10a, 10b sind dann in Serie mit dem Anschluss 24 verbunden, wodurch sich eine Spannungsverdopplung ergibt. Beträgt die Spannung an den Anschlüssen 10a, 10b hingegen etwa 100% der Spannung am Anschluss 24, so sind die Anschlüsse 10a, 10b parallel über die Dioden 46a, 46b mit dem Anschluss 24 verbunden.

Falls die Spannung an den ersten Anschlüssen 10a, 10b im Bereich von 50..100% der Spannung am zweiten Anschluss 24 liegt, so wird das Schaltelement 44 getaktet betrieben. Die Anschlüsse 10a, 10b liegen wechselweise über das Schaltelement 44 in Serie bzw. über die Gleichrichtelemente 46a, 46b parallel. Über das Tastverhältnis des Schaltelements 44 kann das Verhältnis zwischen den Spannungen an den Anschlüssen 10a, 10b und 24 zwischen 50% und 100% geregelt werden.

Durch die gezeigte Kombination beider Schaltungen wird also der Eingangsspannungsbereich mit geringem Aufwand stark nach unten erweitert. In der Praxis ist ein nahezu konstanter hoher Wirkungsgrad über einen relativen Eingangsspannungsbereich von 1:2,5 erreichbar. Damit ist eine optimale Anpassung von Solargeneratoren an Wechselrichter möglich. Die Solargeneratoren sind mit den ersten Anschlüssen 10a, 10b zu verbinden und der Wechselrichter ist mit dem zweiten Anschluss 24 zu verbinden.

In einer bevorzugten Dimensionierung wird die Spannung der Solargeneratoren im Maximum Power Point zu ca. 50% bis 100% der optimalen Eingangsspannung des Wechselrichters gewählt. In diesem Bereich arbeitet die kombinierte Schaltung als Hochsetzsteller.

Wenn der Wechselrichter keine oder nur wenig Energie einspeisen kann, z.B. infolge einer Netzunterbrechung oder einer Leistungsabregelung, so steigt die Spannung an den Solargeneratoren wegen fehlender Belastung wesentlich an. In diesem Fall arbeitet die kombinierte Schaltung als Tiefsetzsteller. Der Wechselrichter wird dadurch vor der hohen Leerlaufspannung geschützt bzw. muss nicht auf diese ausgelegt werden. Dadurch kann er wesentlich kostengünstiger gebaut werden.

In ähnlicher Weise kann der erfindungsgemäße DC/DC-Wandler in einer Ausprägung als Hochsetzsteller in vorteilhafter Weise mit einem dualen Tiefsetzsteller zu einem dualen hochtiefsetzenden Weitbereichswandler kombiniert werden.

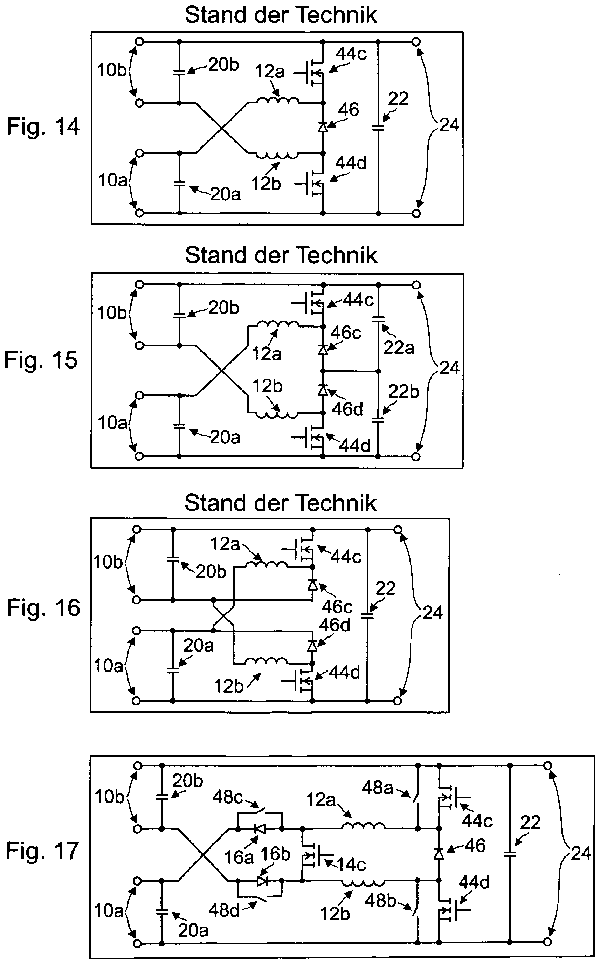

Fig. 14, 15 und 16 zeigen artverwandte duale Tiefsetzsteller, wie sie in der nachveröffentlichten DE 10 2011 011 330 A1 offenbart sind, auf deren gesamten Offenbarungsgehalt hierdurch vollinhaltlich Bezug genommen wird. Diese Tiefsetzsteller stellen Energie gleichzeitig an zwei Eingängen bereit, welche periodisch in Serie und parallel geschaltet werden, und weisen einen sehr hohen Wirkungsgrad auf.

Als Beispiel wird in Fig. 17 der als Hochsetzsteller ausgeführte DC/DC-Wandler nach Fig. 2, wie er in Fig. 4 dargestellt ist, mit dem Tiefsetzsteller nach Fig. 14 kombiniert. Kombinationen dieser oder anderer Ausführungsformen des erfindungsgemäßen DC/DC-Wandlers mit diesem oder anderen dualen Tiefsetzstellern können auf analoge Weise erfolgen, was für den Fachmann leicht nachvollziehbar ist.

Die Kombination entsteht durch das Einfügen des Gleichrichtelements 46 und der Schaltelemente 44c, 44d des dualen Tiefsetzstellers in die Schaltung des erfindungsgemäßen DC/DC-Wandlers.

Optional können zusätzlich die Schalter 48a - 48d eingebaut werden. Dies können z.B. Relaiskontakte sein. Mit ihrer Hilfe können die Schaltelemente 44c, 44d und die Gleichrichtelemente 16a, 16b im statischen Ein-Zustand überbrückt werden, um Durchlassverluste zu vermeiden.

Der Aufwand für die Kombination beider Schaltungen ist also gering, da ein großer Teil der Bauelemente, vor allem die Drosseln 12a, 12b Bestandteil beider Schaltungen sind.

Die Funktion des Weitbereichswandlers ist wie folgt.

Ist die Spannung an den ersten Anschlüssen 10a, 10b größer oder gleichgroß wie am zweiten Anschluss 24, so arbeitet der Weitbereichswandler wie für die Schaltungen in Fig. 2 und Fig. 4 beschrieben. Das Gleichrichtelement 46 ist dauerhaft gesperrt, und die Schaltelemente 44c, 44d leiten bzw. können durch die Schalter 48a, 48b überbrückt werden.

Durch die Erweiterung mit den Elementen des dualen Tiefsetzstellers nach Fig. 14 ist es möglich, die Spannungen an den ersten Anschlüssen 10a, 10b nicht nur hochzusetzen, sondern auch bis zum Faktor 2 tiefzusetzen. Dann leiten die Gleichrichtelemente 16a, 16b bzw. werden mittels der Schalter 48c, 48d überbrückt. Die Anordnung arbeitet nun wie der Tiefsetzsteller nach Fig. 14.

Beträgt die Spannung an den ersten Anschlüssen 10a, 10b etwa 50% der Spannung am zweiten Anschluss 24, so werden die Schaltelemente 44c, 44d statisch geöffnet. Die Anschlüsse 10a, 10b sind dann in Serie über das Gleichrichtelement 46 mit dem zweiten Anschluss 24 verbunden, wodurch sich eine Spannungshalbierung ergibt.

Beträgt die Spannung an den Anschlüssen 10a, 10b hingegen etwa 100% der Spannung am Anschluss 24, so werden die Anschlüsse 10a, 10b parallel über die Schaltelemente 44c, 44d mit dem Anschluss 24 verbunden.

Liegt die Spannung an den ersten Anschlüssen 10a, 10b im Bereich von 50% bis 100% der Spannung am zweiten Anschluss 24, so werden die Schaltelemente 44c, 44d getaktet betrieben. Die Anschlüsse 10a, 10b liegen wechselweise über die Schaltelemente 44c, 44d parallel bzw. über das Gleichrichtelement 46 in Serie. Über das Tastverhältnis der Schaltelemente 44c, 44d kann das Verhältnis zwischen den Spannungen an den Anschlüssen 10a, 10b und 24 zwischen 50% und 100% geregelt werden.

Durch die gezeigte Kombination beider Schaltungen wird also der Ausgangsspannungsbereich mit geringem Aufwand stark nach unten erweitert. In der Praxis ist ein nahezu konstanter hoher Wirkungsgrad über einen relativen Eingangsspannungsbereich von 1:2,5 erreichbar. Damit ist eine optimale Anpassung von Solargeneratoren an Wechselrichter möglich. Die Wechselrichter sind mit den ersten Anschlüssen 10a, 10b zu verbunden und der Solargenerator ist mit dem zweiten Anschluss 24 zu verbinden.

Schließlich ist es auch möglich, die dualen Hoch- oder Tiefsetzsteller durch Verwendung von Synchrongleichrichtern so zu gestalten, dass ein bidirektionaler Leistungsfluss möglich ist. In Verbindung mit dem erfindungsgemäßen DC/DC-Wandler ergeben sich dann bidirektionale Weitbereichswandler.

### Bezugszeichenliste:

- 10, 10a, 10b: erste Anschlüsse
- 12, 12a, 12b: Drosseln
- 13a - 13e: Schaltvorrichtungen
- 14a - 14c: Schaltelemente
- 14g, 14h: Schaltelemente
- 16a - 16c: Gleichrichtelemente
- 18a - 18d: Gleichrichtelemente
- 20, 20a, 20b: Puffer-Kondensatoren
- 22, 22a, 22b: Puffer-Kondensatoren
- 24: zweiter Anschluss
- 30, 30a, 30b: Solargenerator
- 32, 32a, 32b: Wechselrichter
- 44, 44a - 44d: Schaltelemente
- 46, 46a - 46d: Gleichrichtelemente
- 48a - 48d: Überbrückungselemente
- 50: Transformator
- 52: Primärwicklung des Transformators
- 52a - 52d: Sekundärwicklungen des Transformators
- 54, 56: Baugruppen zur Ansteuerung des Transformators

## Patentansprüche

1. Gleichspannungswandler, mit
wenigstens zwei ersten Anschlüssen (10a, 10b) und wenigstens einem zweiten Anschluss (24), wobei ein Energiefluss zwischen den wenigstens zwei ersten Anschlüssen (10a, 10b) einerseits und dem wenigstens einen zweiten Anschluss (24) andererseits möglich ist und die zwei ersten Anschlüsse (10a, 10b) eine gleichgroße oder höhere Spannung aufweisen als der zweite Anschluss (24);
wenigstens einer ersten Drossel (12a), welche mit einem ersten Pol des zweiten Anschlusses (24) verbunden ist;
wenigstens einer zweiten Drossel (12b), welche mit einem zweiten Pol des zweiten Anschlusses (24) verbunden ist;
wenigstens einer ersten Schaltvorrichtung (13a), welche in Serie zu der ersten Drossel (12a) geschaltet ist;
wenigstens einer zweiten Schaltvorrichtung (13b), welche in Serie zu der zweiten Drossel (12b) geschaltet ist; und
wenigstens einer dritten Schaltvorrichtung (13c, 13d, 13e), über welche die von dem zweiten Anschluss (24) abgewandten Pole der ersten und der zweiten Drossel (12a, 12b) miteinander verbunden sind,
**dadurch gekennzeichnet, dass**
ein Pluspol des einen (10b) der ersten Anschlüsse mit einem Pluspol des zweiten Anschlusses (24) verbunden ist und ein Minuspol des anderen (10a) der ersten Anschlüsse mit einem Minuspol des zweiten Anschlusses (24) verbunden ist; und der eine (10a) der ersten Anschlüsse über die erste Schaltvorrichtung (13a) und die erste Drossel (12a) zu dem zweiten Anschluss (24) parallel geschaltet ist und der andere (10b) der ersten Anschlüsse über die zweite Schaltvorrichtung (13b) und die zweite Drossel (12b) zu dem zweiten Anschluss (24) parallel geschaltet ist.

2. Gleichspannungswandler nach Anspruch 1,
**dadurch gekennzeichnet, dass**
die erste, die zweite und/oder die dritte Schaltvorrichtung (13a - 13e) wenigstens ein Schaitelement (14a, 14b, 14c) und/oder wenigstens ein Gleichrichtelement (16a, 16b, 16c) aufweist.

3. Gleichspannungswandler nach Anspruch 1 oder 2,
**dadurch gekennzeichnet, dass**
die erste, die zweite und/oder die dritte Schaltvorrichtung (13a - 13e) wenigstens ein Halbleiterelement aufweist, welches getaktet betreibbar ist.

4. Gleichspannungswandler nach einem der vorhergehenden Ansprüche,
**dadurch gekennzeichnet, dass**
die dem zweiten Anschluss (24) abgewandten Pole der ersten und der zweiten Drossel (12a, 12b) über wenigstens zwei in Serie geschaltete dritte Schaltvorrichtungen (13d, 13e) miteinander verbunden sind; und
ein gemeinsamer Verbindungspunkt der wenigstens zwei dritten Schaltvorrichtungen (13d, 13e) mit einem Hilfspotenzial verbunden ist.

5. Gleichspannungswandler nach Anspruch 4,
**dadurch gekennzeichnet, dass**
das Hilfspotenzial mittels wenigstens einer Kapazität (22a, 22b) bereitgestellt wird, welche mit einem Pol des zweiten Anschlusses (24) verbunden ist.

6. Gleichspannungswandler nach einem der vorhergehenden Ansprüche,
**dadurch gekennzeichnet, dass**
parallel zu den ersten und/oder den zweiten Anschlüssen (10a, 10b, 24) jeweils wenigstens ein Pufferkondensator (20a, 20b, 22, 22a, 22b) geschaltet ist.

7. Gleichspannungswandler nach einem der vorhergehenden Ansprüche,
**dadurch gekennzeichnet, dass**
der Energiefluss zwischen den ersten Anschlüssen (10a, 10b) und dem zweiten Anschluss (24) auf eine Richtung eingeschränkt ist.

8. Gleichspannungswandler nach einem der Ansprüche 1 bis 7,
**dadurch gekennzeichnet, dass**
er als Hochsetzsteller ausgestaltet ist und mit einem dualen Tiefsetzsteller zu einem hochtiefsetzenden Gleichspannungswandler kombiniert ist.

9. Gleichspannungswandler nach einem der Ansprüche 1 bis 7,
**dadurch gekennzeichnet, dass**
er als Tiefsetzsteller ausgestaltet ist und mit einem dualen Hochsetzsteller zu einem hochtiefsetzenden Gleichspannungswandler kombiniert ist.

10. Schaltungsanordnung mit einem Gleichspannungswandler nach einem der Ansprüche 1 bis 9, bei welcher die ersten Anschlüsse (10a, 10b) des Gleichspannungswandlers jeweils aus wenigstens einer Sekundärwicklung (52a, 52b) eines Transformators (50) gespeist werden.

11. Schaltungsanordnung nach Anspruch 10,
**dadurch gekennzeichnet, dass**
in Reihe zu den Sekundärwicklungen (52a, 52b) jeweils wenigstens eine zusätzliche Sekundärwicklung (52c, 52d) vorgesehen ist, welche jeweils mit wenigstens einer zusätzlichen Schaltvorrichtung (18c, 18d) in Serie geschaltet ist.

12. Schaltungsanordnung nach Anspruch 10 oder 11,
**dadurch gekennzeichnet, dass**
eine Primärseite (52) des Transformators (50) aus einer Baugruppe (54, 56) gespeist wird, welche den Transformator mit einer Wechselspannung ansteuert.

13. Wechselrichterschaltung, insbesondere Solarwechselrichterschaltung, mit wenigstens einem Gleichspannungswandler nach einem der Ansprüche 1 bis 9 oder einer Schaltungsanordnung nach einem der Ansprüche 10 bis 12 und wenigstens einem Wechselrichter (32, 32a, 32b).

## Claims

1. DC-to-DC converter, comprising
at least two first terminals (10a, 10b) and at least one second terminal (24), wherein an energy flow is possible between the at least two first terminals (10a, 10b) and the at least one second terminal (24), and the two first terminals (10a, 10b) have a voltage that is the same as or higher than the second terminal (24);
at least one first inductor (12a) connected to a first pole of the second terminal (24);
at least one second inductor (12b) connected to a second pole of the second terminal (24); at least one first switching device (13a) wired in series with the first inductor (12a);
at least one second switching device (13b) wired in series with the second inductor (12b); and
at least one third switching device (13c, 13d, 13e), by means of which the poles, facing away from the second terminal (24), of the first and second inductors (12a, 12b) are interconnected,
**characterised in that**
a positive pole of one (10b) of the first terminals is connected to a positive pole of the second terminal (24) and a negative pole of the other (10a) first terminal is connected to a negative pole of the second terminal (24); and
one (10a) of the first terminals is wired in parallel with the second terminal (24) by means of the first switching device (13a) and the first inductor (12a), and the other (10b) first terminal is wired in parallel with the second terminal (24) by means of the second switching device (13b) and the second inductor (12b).

2. DC-to-DC converter according to claim 1,
**characterised in that**
the first, second and/or third switching device (13a-13e) comprise(s) at least one switching element (14a, 14b, 14c) and/or at least one rectification element (16a, 16b, 16c).

3. DC-to-DC converter according to either claim 1 or claim 2,
**characterised in that**
the first, second and/or third switching device (13a-13e) comprise(s) at least one semiconductor element, which can be operated in a clocked manner.

4. DC-to-DC converter according to any of the preceding claims,
**characterised in that**
the poles, facing away from the second terminal (24), of the first and second inductors (12a, 12b) are interconnected by means of at least two third switching devices (13d, 13e) wired in series; and
a common connection point of the at least two third switching devices (13d, 13e) is connected to an auxiliary potential.

5. DC-to-DC converter according to claim 4,
**characterised in that**
the auxiliary potential is provided by means of at least one capacitor (22a, 22b) connected to a pole of the second terminal (24).

6. DC-to-DC converter according to any of the preceding claims,
**characterised in that**
at least one buffer capacitor (20a, 20b, 22, 22a, 22b) is wired in parallel with the first and/or second terminals (10a, 10b, 24) in each case.

7. DC-to-DC converter according to any of the preceding claims,
**characterised in that**
the energy flow between the first terminals (10a, 10b) and the second terminal (24) is restricted to one direction.

8. DC-to-DC converter according to any of claims 1 to 7,
**characterised in that**
said converter is designed as a boost converter and is combined with a dual buck converter to form a buck-boost DC-to-DC converter.

9. DC-to-DC converter according to any of claims 1 to 7,
**characterised in that**
said converter is designed as a buck converter and is combined with a dual boost converter to form a buck-boost DC-to-DC converter.

10. Circuit arrangement comprising a DC-to-DC converter according to any of claims 1 to 9, wherein the first terminals (10a, 10b) of the DC-to-DC converter are each fed from at least one secondary winding (52a, 52b) of a transformer (50).

11. Circuit arrangement according to claim 10,
**characterised in that**
at least one additional secondary winding (52c, 52d) is provided in series with each secondary winding (52a, 52b) and each additional winding is wired in series with at least one additional switching device (18c, 18d).

12. Circuit arrangement according to either claim 10 or claim 11,
**characterised in that**
a primary side (52) of the transformer (50) is fed from a module (54, 56) that actuates the transformer by an AC voltage.

13. Inverter circuit, in particular a solar inverter circuit, comprising at least one DC-to-DC converter according to any of claims 1 to 9 or a circuit arrangement according to any of claims 10 to 12 and at least one inverter (32, 32a, 32b).

## Revendications

1. Convertisseur continu-continu, comportant
au moins deux premières connexions (10a, 10b) et au moins une deuxième connexion (24), un flux d'énergie étant possible entre lesdites au moins deux premières connexions (10a, 10b) d'une part et ladite au moins une deuxième connexion (24) d'autre part et les deux premières connexions (10a, 10b) présentant une tension égale ou supérieure à celle de la deuxième connexion (24) ;
au moins une première self (12a) qui est reliée à un premier pôle de la deuxième connexion (24) ;
au moins une deuxième self (12b) qui est reliée à un deuxième pôle de la deuxième connexion (24) ;
au moins un premier dispositif de commutation (13a) qui est couplé en série avec la première self (12a) ;
au moins un deuxième dispositif de commutation (13b) qui est couplé en série avec la deuxième self (12b); et
au moins un troisième dispositif de commutation (13c, 13d, 13e) par l'intermédiaire duquel les pôles de la première et de la deuxième self (12a, 12b) éloignés de la deuxième connexion (24) sont reliés entre eux,
**caractérisé en ce**
**qu'**un pôle positif de l'une (10b) des premières connexions est relié à un pôle positif de la deuxième connexion (24) et un pôle négatif de l'autre (10a) des premières connexions est relié à un pôle négatif de la deuxième connexion (24) ; et l'une (10a) des premières connexions est couplée en parallèle avec la deuxième connexion (24) par l'intermédiaire du premier dispositif de commutation (13a) et de la première self (12a) et l'autre (10b) des premières connexions est couplée en parallèle avec la deuxième connexion (24) par l'intermédiaire du deuxième dispositif de commutation (13b) et de la deuxième self (12b).

2. Convertisseur continu-continu selon la revendication 1,
**caractérisé en ce que**
le premier, le deuxième et/ou le troisième dispositif de commutation (13a - 13e) présente au moins un élément de commutation (14a, 14b, 14c) et/ou au moins un élément de redressement (16a, 16b, 16c).

3. Convertisseur continu-continu selon la revendication 1 ou 2,
**caractérisé en ce que**
le premier, le deuxième et/ou le troisième dispositif de commutation (13a - 13e) présente au moins un élément semi-conducteur qui peut fonctionner de manière cadencée.

4. Convertisseur continu-continu selon l'une des revendications précédentes,
**caractérisé en ce que**
les pôles de la première et de la deuxième self (12a, 12b) éloignés de la deuxième connexion (24) sont reliés l'un à l'autre par au moins deux troisièmes dispositifs de commutation (13d, 13e) couplés en série ; et
un point de liaison commun desdits au moins deux troisièmes dispositifs de commutation (13d, 13e) est relié à un potentiel auxiliaire.

5. Convertisseur continu-continu selon la revendication 4,
**caractérisé en ce que**
le potentiel auxiliaire est fourni au moyen d'au moins un condensateur (22a, 22b) qui est relié à un pôle de la deuxième connexion (24).

6. Convertisseur continu-continu selon l'une des revendications précédentes,
**caractérisé en ce**
**qu'**au moins un condensateur tampon (20a, 20b, 22, 22a, 22b) est couplé en parallèle respectivement avec les premières et/ou les deuxièmes connexions (10a, 10b, 24).

7. Convertisseur continu-continu selon l'une des revendications précédentes,
**caractérisé en ce que**
le flux d'énergie entre les premières connexions (10a, 10b) et la deuxième connexion (24) est limité à une direction.

8. Convertisseur continu-continu selon l'une des revendications 1 à 7,
**caractérisé en ce**
**qu'**il est conçu comme un convertisseur élévateur et est combiné avec un convertisseur abaisseur double pour former un convertisseur continu-continu élévateur/abaisseur.

9. Convertisseur continu-continu selon l'une des revendications 1 à 7,
**caractérisé en ce**
**qu'**il est conçu comme un convertisseur abaisseur et est combiné avec un convertisseur élévateur double pour former un convertisseur continu-continu élévateur/abaisseur.

10. Circuit comportant un convertisseur continu-continu selon l'une des revendications 1 à 9, dans lequel les premières connexions (10a, 10b) du convertisseur continu-continu sont respectivement alimentées par au moins un enroulement secondaire (52a, 52b) d'un transformateur (50).

11. Circuit selon la revendication 10,
**caractérisé en ce**
**qu'**au moins un enroulement secondaire supplémentaire (52c, 52d) est prévu respectivement en série avec les enroulements secondaires (52a, 52b) et est couplé respectivement en série avec au moins un dispositif de commutation supplémentaire (18c, 18d).

12. Circuit selon la revendication 10 ou 11,
**caractérisé en ce**
**qu'**un côté primaire (52) du transformateur (50) est alimenté par un module (54, 56) qui commande le transformateur avec une tension alternative.

13. Circuit onduleur, en particulier circuit onduleur solaire, comportant au moins un convertisseur continu-continu selon l'une des revendications 1 à 9 ou un circuit selon l'une des revendications 10 à 12 et au moins un onduleur (32, 32a, 32b).
